# EUROPEAN PATENT APPLICATION

(11) **EP 1 523 166 A1**
(43) Date of publication of application: **13.04.2005**
(21) Application number: 03292468.0
(22) Date of filing: 07.10.2003
(51) Int. Cl.: H04M 3/56, H04M 3/38

(54) **Conference system with voice recognition as identification method**

(71) Applicant: Hewlett-Packard Development Company, L.P., Houston, TX 77070 (US)
(72) Inventor: Wieczorek, Philippe, Saint Ismier 38330 (FR); Kyriakides, Lionel, Brignoud 38190 (FR)
(74) Representative: Lloyd, Richard Graham

(57) **Abstract**

Embodiments of the present invention provide a communication system and method to support a conference between a plurality of people; the method comprising the steps of establishing conference communication channels between at least a pair of communication devices of the plurality of people, having authenticated at least one person of the plurality of people using a voice sample of that at least one person.

## Description

### Field of the Invention

The present invention relates to a communication system and method and, more particularly, to such a system and method for providing secure, confidential, conferencing facilities.

### Background to the Invention

As communication systems have improved, many companies and organisations use the greatly increased bandwidth and speed of current communication technologies to host meetings via conferences. Within such a conference, each participant uses a respective communication device such as, for example, a laptop, a telephone, a desktop computer or a mobile communication device. Alternatively, the devices to be used in such a conference might be prescribed to be IP devices. If the conference is confidential and there is a need for the participants to identify themselves in a secure manner, in the case of IP devices, the IP addresses are used to authenticate the participants before allowing those participants to join the conference.

However, many organisations protect themselves from viruses and the like using, for example, a firewall. It will be appreciated by those skilled in the art that a firewall presents only a single IP address to the outside world even though the devices used by each employee within the organisation might have respective IP addresses. Therefore, conventional IP addresses might be inappropriate as a mechanism for user authentication, especially if some of the participants are behind a firewall.

Still further, in such IP address authentication systems, only IP devices could be used to participate in the conference. It will be appreciated that this is a significant limitation if conference participants wish to use a variety of convenient devices that are available to them at the time of the conference, which devices might not be TCP/IP devices.

It is an object of embodiments of the present invention at least to mitigate some of the problems of the prior art.

### Summary of Invention

Accordingly, embodiments of the present invention provide a communication system comprising means to access storage for storing first data associated with a physical characteristic of a first person; a sampler to obtain second data associated with the physical characteristic; and an analyser to compare the first data associated with the physical characteristic with the second data associated with the characteristic to determine if the first and second data are correlated; and communication means, responsive to the analyser, to establish a communication channel with a first communication device.

Advantageously, embodiments of the present invention allow participants to a conference to be authenticated uniquely before allowing the conference to proceed. Using biometric authentication might provide greater security in that is might be more difficult to fake a biometric measure of a person.

Furthermore, a number of different devices can be used to participate in the conference, since embodiments can be realised in which the communication device capabilities are taken into account in preparing data for transmission to, and display upon, those devices.

Embodiments provide a communication system in which the communication means to establish the communication channel with the first communication device comprises means to route data between the communication channel and at least one other communication channel associated with a second communication device. Preferably, the communication means comprises means to route data between the communication channel and a plurality of channels associated with a plurality of communication devices.

In preferred embodiments, authentication preferably takes place using voice samples of the potential conference participants. Therefore, embodiments provide a communication system in which the storage stores at least one of a sample of voice data associated with the first person and a voice model associated with voice data derived from the first person. It will be appreciated that the voice model might represent a copy of a previously uttered voice sample or a more sophisticated voice model arranged to recognise words chosen independently by a speaker.

Preferably, embodiments provide a communication system further comprising means, responsive to the analyser, to output a message to the first communication device that a communication channel will not be established to the first communication device as the first person is not authorised to communicate via the communication system.

Embodiments provide means to establish a further communication channel between the first communication device and a communication device of an authorised person in response to the means to output the message to the first communication device that the communication channel will not be established to the first communication device as the first person is not authorised to communicate via the communication system outputting such a message. Preferably, the communication system further comprises means, responsive to a command from the authorised person, to establish the communication channel with the first communication device. Advantageously, operator assistance or the like can be obtained by a caller to allow them to join the conference.

Embodiments provide a communication system comprising means to output a message inviting the first person to articulate a further utterance; the sampler being operable, in response to the invitation, to obtain a further sample of data associated with the physical characteristic.

A second aspect of embodiments provides a communication method comprising the steps of storing first data associated with a physical characteristic of a first person; obtaining second data associated with the physical characteristic; and comparing the first data with the second data to determine if the first and second data are correlated; and establishing a communication channel with a first communication device of the first person in response to said analysing.

Embodiments provide a communication method in which the step of establishing the communication channel with the first communication device comprises routing data between the communication channel and at least one other communication channel associated with a second communication device. Preferably, embodiments provide a communication method in which the step of establishing the communication channel with the first communication device comprises means to route data between the communication channel and a plurality of channels associated with a plurality of communication devices.

Embodiments provide a communication method in which the storage stores at least one of a sample of voice data associated with the first person and a voice model associated with voice data derived from the first person.

Preferably, embodiments provide a communication method comprising outputting, responsive to the analyser, a message to the first communication device that a communication channel will not be established to the first communication device as the first person is not authorised to communicate via the communication system.

In some instances, the voice authentication might fail for reasons beyond the control of the caller even though they are ostensibly authorised to participate in the conference. Suitably, embodiments provide a communication method further comprising the step of establishing a further communication channel between the first communication device and a communication device of an authorised person in response to the means to output the message to the first communication device that the communication channel will not be established to the first communication device as the first person is not authorised to communicate via the communication system. Preferably, embodiments provide a communication method further comprising establishing the communication channel with the first communication device in response to a command input by the authorised person.

Embodiments provide a communication method comprising the step of outputting a message inviting the first person to articulate a further utterance; and obtaining a further sample of data associated with the physical characteristic.

Preferred embodiments provide a communication method to support a conference between a plurality of people; the method comprising the steps of establishing conference communication channels between communication devices of the plurality of people, having authenticated at least one person of the plurality of people using a voice sample of that at least one person.

It will be appreciated that practical embodiments of the present invention might be realised using hardware, software or, more realistically, a combination of hardware and software. Therefore, embodiments provide a computer program comprising executable code to implement a system or method as described or claimed in this specification. Preferably, embodiments also provide a computer program product comprising a medium storing such a computer program.

### Brief Description of the Drawings

Embodiments of the present invention will now be described, by way of example only, with reference to the accompanying drawings in which:
figure 1 shows a communication architecture or arrangement according to an embodiment;
figure 2 shows a server according to an embodiment;
figure 3 shows a flowchart of a communication method according to an embodiment; and
figure 4 shows a flowchart of a communication method according to an embodiment.

### Detailed Description of Preferred Embodiments

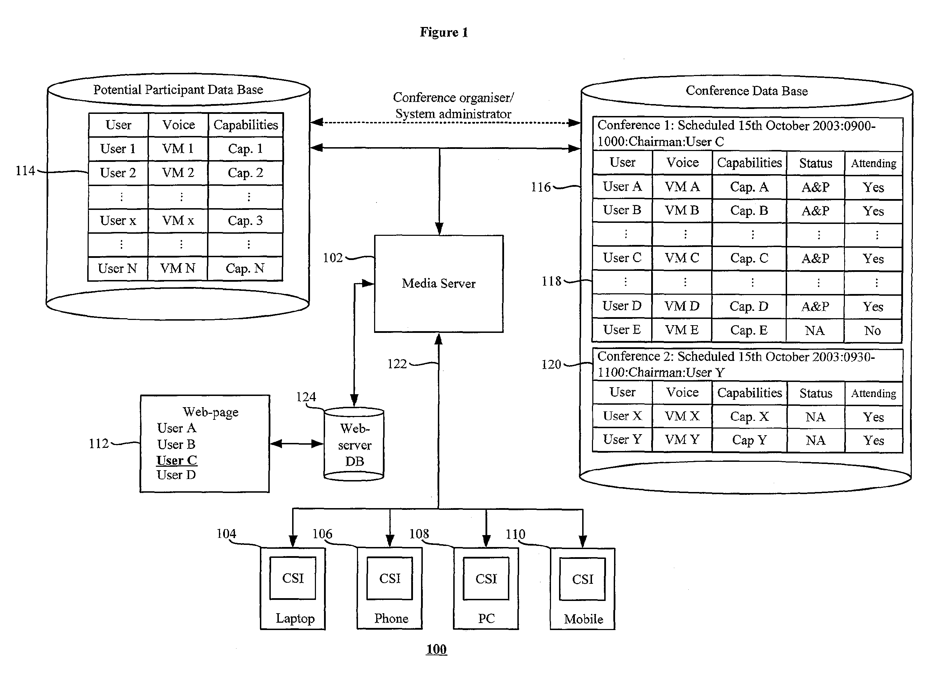

Figure 1 shows a communication arrangement 100 comprising a media server 102. The media server 102 is used to host a conference in which the participants can use a number of communication devices to participate in the conference. In the example illustrated, the devices to be used in the conference comprise a laptop 104, a telephone 106, a desktop computer 108 and a mobile telephone 110. The communication arrangement 100 also comprises a web-page 112 or other commonly accessible output means.

The media server 102 has access to an employee, or potential conference participants, database 114, which holds details relating to employees within an organisation or group of organisations. The media server 102 also has access to further storage 116 that is used to hold details of scheduled conferences. It can be appreciated that the non-volatile storage 116 is illustrated as containing details for two conferences. These details are held in the form of respective data bases or tables 118 and 120.

A system administrator, or conference organiser, uses the details contained within the employee data base 114 to select those persons who are entitled to join or participate in a particular conference. The conference organiser uses the selected employees to create the conference participant data bases. The conference organiser also ensures that the conference date and time are selected and that a conference chairperson is also designated.

It will be appreciated that the media server 102, either alone, or in conjunction with at least one and, preferably, the storage 114 and 116 storing the data bases, and jointly or severally with the web-server data base, represents an embodiment, or at least part of an embodiment, of a communication system.

Referring more particularly to the employee data base 114, it can be appreciated that the data base 114 comprises a number of employee names user 1 to user N. Each employee name has an associated voice model used in speech processing to recognise, that is, to authenticate, the employees. The data base 114 shows a number of such voice models VM1 to VM N. The data base 114 also comprises, for each employee record, device performance capabilities Cap.1 to Cap N., which provide an indication of the type of communication device that they typically use for conferences or in their day-to-day work together with an indication of the capabilities of that device. The indications Cap. 1 to Cap. N might comprise an indication of an actual device used by the user such as the laptop 104, the phone 106, the desktop 108 or the mobile 110, together with an indication of the communication capabilities of the associated devices such as, for example, TCP/IP, IEEE 802.11, conventional telephone line, visual display abilities, and whether or not they are Internet enabled. The intention of the device performance capabilities is to allow the media server to interact with the devices, via a number of communication channels 122, in a manner that can be matched or tailored to the needs of the devices.

It can be appreciated that the first conference data base 118 is scheduled for October 15^{th}, 2003, 9:00 am-10:00 am and will be chaired by user C. The conference participants are users A, B, C, D and E, amongst others. Similarly, the second conference data base 120 is scheduled for October 15^{th}, 2003, 9:30 am-11:00 am between participants user X and user Y, with user Y being the chairperson. Each conference data base 118 and 120 also comprises voice models for each of the participants as well as an indication of the capabilities of the communication device or devices to be used in participating in the conference. Each potential participant in a conference data bases 118 and 120 also comprises a "status" entry and an "attending" entry. The "status" entry is used during the conference and comprises an indication of whether or not an invitee is currently participating in the conference. For example, a "status" entry might take one of the following values "authenticating", "authenticated and present", or "retired" to reflect that, at any one time, a participant might be in the process of authentication, have been authenticated and is taking part in the conference or has subsequently retired from the conference. The "attending" entry contains an indication of whether or not the participant accepted the invitation to participate in the conference

In advance of the start of a conference, the media server 102 sends a message to each participant informing them of the details of the conference. For example, the media server might generate an Outlook, or other, message that has an invitation to join the conference, which, if accepted, automatically creates an entry in the calendar of the participant and creates a reply to the message accepting the invitation to the conference. If the user declines the invitation, a message is created and sent to the media server 102 containing an indication to that effect. The reply to the invitation is used by the media server to populate the "attending" entries in the data bases 118 and 120.

Each participant to a conference is authenticated prior to the conference commencing. In preferred embodiments, a participant establishes a voice communication channel with the media server 102 and articulates, in response to an invitation issued by the media server 102, an utterance such as, for example, their name. The utterance is processed by a respective voice model VM A to VM E to authenticate the participant. If there is sufficient correlation between the utterance and the voice model, the participant is admitted to the conference. If there is insufficient correlation between the utterance and the voice model, the participant is refused admittance to the conference. Instead, the media server 102 outputs an indication that the participant's authentication has failed and that they have not been admitted to the conference. The media server is arranged to invite the prospective participant to repeat the authentication process. If the authentication process fails a predetermined number of times, the prospective participant is excluded from the conference. Alternatively, if the authentication of the user fails, the user can be put in contact with an operator who can authenticate the prospective participant and admit them to the conference. Still further, embodiments can be realised in which the prospective participant can be given the opportunity to provide authentication in another manner. For example, the media server 102 might output a voice message inviting the prospective participant to enter a predetermined password, such as, for example, a PIN number or other identifier that is detected using DTMF tone detection by the media server 102. Once a participant has been admitted to the conference their "status" entry assumes the value "authenticated and present" until they retire, whereupon it is changed to "retired".

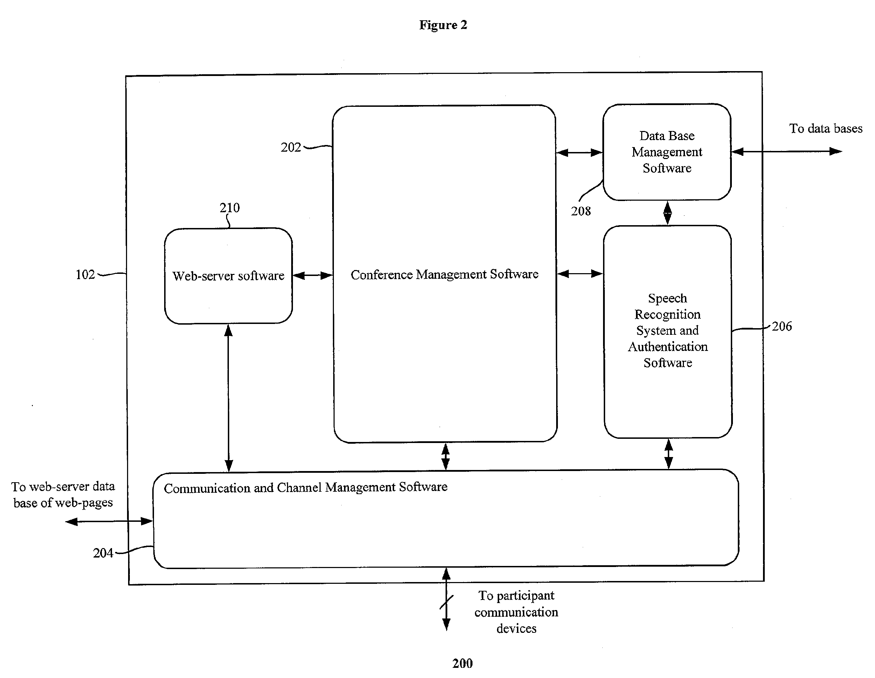

Referring to figure 2 there is shown schematically the structure of a media server 102 according to an embodiment. The media server 102 comprises conference management software 202 that is used to control a hosted conference and to allow the participants to interact by ensuring that all communications are appropriately exchanged between participants whose status is "authenticated and present". The conference management software interacts with communication and channel management software (CCMS) 204. The CCMS 204 uses the information obtained by the conference management software 202 from the conference data bases to allocate and use the communication resources (not shown) needed to support the various communication devices planned to be used during the conference. The media server 102 also comprises voice processing software 206 that analyses a prospective conference participant's voice to determine, in conjunction with the voice models stored within the conference data bases 118 and 120, as appropriate, whether the speaker is authorised to join the conference. If a speaker's utterance is recognised, they are allowed to join a conference. If a speaker's utterance is not recognised, they are not allowed to join a conference.

It will be appreciated that the conference management software 202 and the voice processing software 206 access the conference data bases 118 and 120 via data base management software 208.

In preferred embodiments, the conference management software 202 is arranged to output data representing an indication of the current speaker during the conference. The data representing the current speaker, is used, in preferred embodiments, to inform the conference participants of the identity of a current speaker from time to time as the speaker changes. For example, embodiments can be realised in which the data representing the current speaker is used by web-server software 210 to update a web-page, such as, for example, the web-page 112 shown in figure 1, that is centrally accessible by the conference participants via a web-server data base 124. Alternatively, or additionally, embodiments can be realised in which conference participant data such as, for example, data representing a current speaker, is output to each, or selectable ones, of the communication devices used by the conference participants taking into account the capabilities of the devices used by the conference participants.

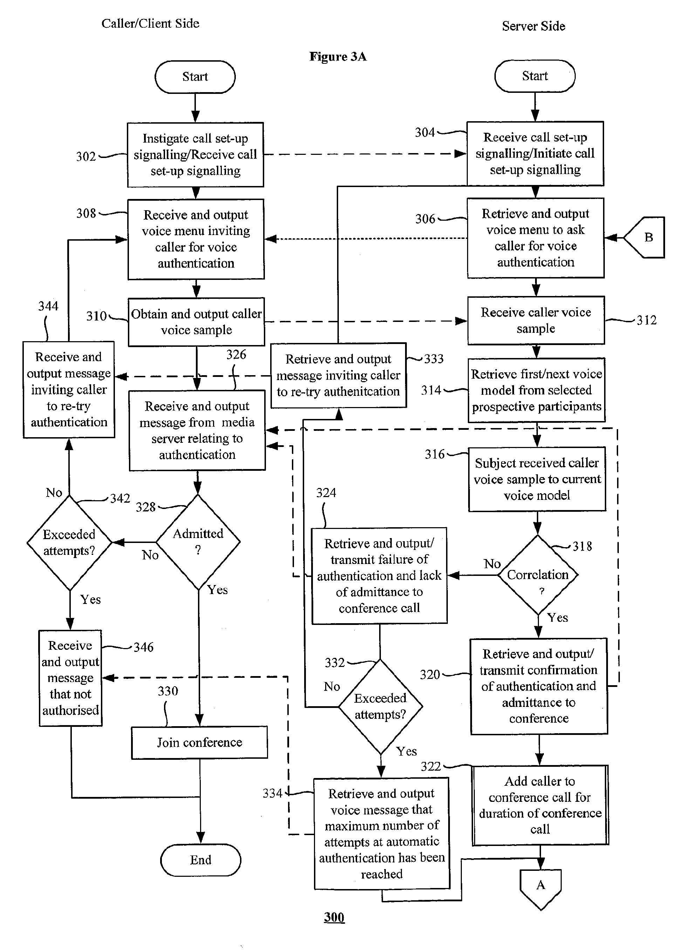

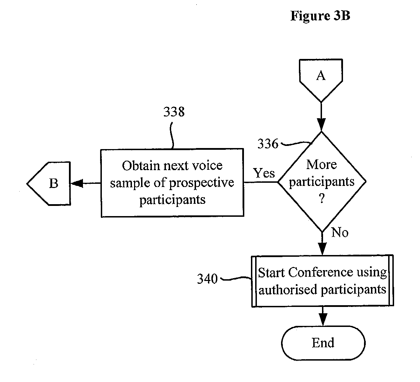

Figure 3 shows a flowchart 300 of an interaction between a prospective conference participant's communication device and the media server 102. At step 302, a prospective conference participant, using their communication device, contacts the media server, as indicated by a dashed line. The media server 102 receives the communication from the communication device and establishes a voice channel with the communication device at step 304. Alternatively, the media server can instigate the call to the prospective conference participants, or selected participants, in which case, the roles of steps 302 and 304 will be reversed. This alternative arrangement has the additional benefit of the media server 102 being able to retrieve the appropriate voice model in advance of a potential conference participant being requested to submit their voice sample or otherwise provide authentication.

The calling prospective conference participant is requested, via an appropriate voice menu retrieved and output by the media server, to provide voice authentication. The invitation is received and output via the communication device of the participant at step 308. A speech sample of the calling prospective participant is obtained at step 310 and transmitted to the media server 102. The media server 102 receives the speech sample at step 312 and retrieves the first or next, as the case may be, voice model from the appropriate data base for the conference to be established at step 314. The received speech sample is subjected to the current voice model at step 316 to authenticate the caller. A determination is made at step 318 as to whether or not there is sufficient correlation between the caller's voice sample and the current voice model. If the determination at step 318 shows that the caller has been authenticated, a message to that effect is output by the media server 102 to the communication device of the caller at step 320 and the caller is admitted to the conference at step 322. Admitting the caller to the conference entails updating the appropriate conference data base to show the current status of the caller. However, if the determination at step 318 shows that the caller has not been authenticated, the media server 102 outputs a message to that effect at step 324.

The messages output at steps 320 or 324 are received by the communication device of the caller at step 326. A determination is made at step 328 as to whether or not the callerhas been admitted to the conference. If the determination is that the caller has been admitted to the conference, processing proceeds to step 330, where the caller joins the conference.

Following step 324, a determination is made, at step 332, as to whether or not a current caller has exceeded a predetermined number of attempts to join the conference. If the determination is negative, processing passes to step 333 where the media server retrieves and outputs to the communication device of the caller a message inviting the caller to reattempt authentication, then processing returns to step 306 where the caller is invited to submit a voice sample again. It will be appreciated that when processing reaches step 314, the media server 102 can be arranged to obtain the next voice model from the participant data base or use the same voice model. Therefore, the determination made at step 332 can be based on a number of authentication attempts per voice model or a total number of passes through the voice models of the conference data base.

If the determination at step 332 is that the caller has exhausted their maximum permissible number of attempts to join the conference, the caller is sent a message to that effect at step 334. Processing then continues at step 336 where a determination is made as to whether or not there are further prospective participants in the conference data base to process. If there are further prospective participants the next voice model is retrieved, at step 338, from the data base in anticipation of receiving the next call or in anticipation of making the next call, otherwise the conference proceeds at step 340.

If it was determined at step 328 that the caller was not authenticated, a determination is made at step 342 of whether or not the caller has exceeded their maximum number of attempts to join the conference. If the determination is negative, the message output at step 333 is received and output, at step 344. The message invites the caller to submit a further voice sample and processing returns to step 308. However, if the determination at step 342 is that the caller has exceeded a maximum number of attempts to join a conference, the message sent at step 334 is received and output at step 346 and processing terminates, subject to the those embodiments that advise the caller to contact an operator or to use an alternative means of authentication.

In preferred embodiments, the message output at step 334 will also contain an invitation to use an alternative form of authentication suchas contacting an operator or using a PIN number entered using DTMF tones.

Embodiments can be realised in which a caller might be recognised but the caller might not be authorised. In such an embodiment, the caller might be advised to contact an operator or conference organiser to obtain permission to join the conference.

It will be appreciated that the voice processing and voice menus in the embodiments described might be provided using an interactive voice response unit such as that provided by the OpenCall Media platform available from Hewlett Packard Company.

It can be appreciated that the above embodiments, upon receiving a call from a prospective participant to join a conference, tries each voice model in turn until a match is found or until a predetermined number of attempts to join the conference had failed. However, embodiments are not limited to such arrangements. Embodiments can be realised in which the media server 102 instigates the call to a prospective participant. In such circumstances, the media server 102 will be able to access the correct voice model rather than having to try each voice model or selected voice models in turn.

Although the above embodiments have been described with reference to the conference participants being selected from an employee data base 114, embodiments are not limited to such arrangements. Embodiments can be realised in which a conference data base, such as, for example, the first conference data base or table 118, can also be populated with, or include, details relating to a person entitled to join a conference but who is not an employee of the organisation or group of organisations. Preferably, such a person will have been contacted in advance of the conference by the conference organiser, or other person, to ask them to register or to otherwise ensure that the person is able to provide authentication when attempting to join the conference. For example, the potential participant might be asked to go to a particular web-page to provide contact details as well as a voice sample that can be used to authenticate the person when they attempt to join the conference. Preferably, the voice sample is used to construct a voice model that can be used in recognising the person's voice.

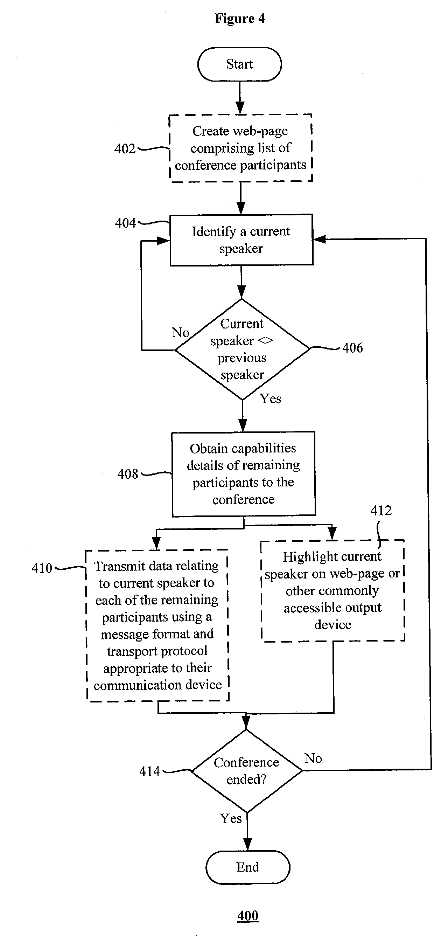

Once the conference is in progress, processing proceeds as depicted in the flowchart 400 of figure 4. At step 402, which is optional, the web-page 112 is created by the web-server software and stored in the web-server data base 124. The current speaker in the conference is identified at step 404 by comparing the current voice sample received by the media server 102 via the communication channels with the voice models of the authenticated participants. A determination is made at step 406 of whether or not the current speaker is different to a previous speaker. If the determination is that the current speaker is not different to the previous speaker, processing resumes at step 404. However, if the determination is that the current speaker is different to the previous speaker, the data base management software obtains the device capabilities of the remaining conference participants and either constructs an appropriate message containing data that can be used to display an indication CSI of the current speaker on those devices or the web-page providing an indication of the current speaker is updated at steps 410 and 412 respectively. In the embodiment shown in figure 1, the current speaker is user C and is indicated as such using bold type and underlining. In preferred embodiments, steps 410 and 412 are both performed. A determination is made at step 414 of whether or not the conference has ended. If so, processing terminates. If not, processing resumes at step 404.

It will be appreciated by one skilled in the art that steps 404 and 406 are preferably implemented using some form or degree of hysteresis so that the current speaker does not change immediately or in response to someone making a very brief comment.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A communication system comprising means to access storage for storing first data associated with a physical characteristic of a first person; a sampler to obtain second data associated with the physical characteristic; and an analyser to compare the first data associated with the physical characteristic with the second data associated with the characteristic to determine if the first and second data are correlated; and communication means, responsive to the analyser, to establish a communication channel with a first communication device of the first person.

2. A communication system as claimed in claim 1 in which the communication means to establish the communication channel with the first communication device comprises means to route data between the communication channel and at least one other communication channel associated with a second communication device.

3. A communication system as claimed in any preceding claim in which the communication means to establish the communication channel with the first communication device comprises means to route data between the communication channel and a plurality of channels associated with a plurality of communication devices.

4. A communication system as claimed in any preceding claim in which the storage stores at least one of a sample of voice data associated with the first person and a voice model associated with voice data derived from the first person.

5. A communication system as claimed in any preceding claim, further comprising means, responsive to the analyser, to output a message to the first communication device that a communication channel will not be established to the first communication device as the first person is not authorised to communicate via the communication system.

6. A communication system as claimed in claim 5, further comprising means to establish a further communication channel between the first communication device and a communication device of an authorised person in response to the means to output the message to the first communication device that the communication channel will not be established to the first communication device as the first person is not authorised to communicate via the communication system outputting such a message.

7. A communication system as claimed in claim 6, further comprising means, responsive to a command from the authorised person, to establish the communication channel with the first communication device.

8. A communication system as claimed in any preceding claim comprising means to output a message inviting the first person to articulate a further utterance; the sampler being operable, in response to the invitation, to obtain a further sample of data associated with the physical characteristic.

9. A communication method comprising the steps of storing first data associated with a physical characteristic of a first person; obtaining second data associated with the physical characteristic; and comparing the first data with the second data to determine if the first and second data are correlated; and establishing a communication channel with a first communication device of the first person in response to said analysing.

10. A communication method as claimed in claim 9 in which the step of establishing the communication channel with the first communication device comprises routing data between the communication channel and at least one other communication channel associated with a second communication device.

11. A communication method as claimed in either of claims 9 and 10 in which the storage stores at least one of a sample of voice data associated with the first person and a voice model associated with voice data derived from the first person.

12. A communication method as claimed in any of claims 9 to 11 comprising outputting, responsive to the analyser, a message to the first communication device that a communication channel will not be established to the first communication device as the first person is not authorised to communicate via the communication system.

13. A communication method further as claimed in claim 12 further comprising the step of establishing a further communication channel between the first communication device and a communication device of an authorised person in response to the means to output the message to the first communication device that the communication channel will not be established to the first communication device as the first person is not authorised to communicate via the communication system.

14. A communication method as claimed in claim 13 comprising establishing the communication channel with the first communication device in response to a command input by the authorised person.

15. A communication method as claimed in any of claims 9 to 14 comprising the step of outputting a message inviting the first person to articulate a further utterance; and obtaining a further sample of data associated with the physical characteristic.

16. A conference communication method to support a conference between a plurality of people; the method comprising the steps of establishing conference communication channels between communication devices of the plurality of people, having authenticated at least one person of the plurality of people using a voice sample of that at least one person.

17. A computer program comprising executable code to implement a system or method as claimed in any preceding claim.

18. A computer program product comprising storage storing a computer program as claimed in claim 17.
